# EUROPEAN PATENT APPLICATION

(11) **EP 3 611 287 A1**
(43) Date of publication of application: **19.02.2020**
(21) Application number: 18883563.1
(22) Date of filing: 01.08.2018
(51) Int. Cl.: C22C 38/04, C22C 38/02, C22C 38/12, C22C 38/14, C22C 38/06, C22C 38/08, C22C 38/16, C21D 8/02

(54) **S355G10+M WIDE AND HEAVY STEEL PLATE HAVING LOW-TEMPERATURE TOUGHNESS FOR OCEAN ENGINEERING, AND METHOD FOR MANUFACTURING SAME**

(30) Priority: 29.11.2017 CN 201711223171
(71) Applicant: Nanjing Iron&Steel Co., Ltd., Nanjing, Jiangsu 210035 (CN)
(72) Inventor: PAN, Zhongde, Nanjing Jiangsu 210035 (CN); WU, Junping, Nanjing Jiangsu 210035 (CN); HUO, Songbo, Nanjing Jiangsu 210035 (CN); JIANG, Jinxing, Nanjing Jiangsu 210035 (CN); GAO, Deping, Nanjing Jiangsu 210035 (CN); ZHANG, Dong, Nanjing Jiangsu 210035 (CN); CAO, Yuliang, Nanjing Jiangsu 210035 (CN)
(74) Representative: Gong, Jinping
(86) International application number: PCT/CN2018/098047
(87) International publication number: WO 2019/105055

(57) **Abstract**

The present invention discloses an S355G10+M wide and heavy steel plate having low-temperature toughness for ocean engineering. According to the present invention, the composition design of low-carbon, Nb, Ti, Ni and Cr addition is adopted, no V alloy is added, and the costs of raw materials are low; a 320 mm large-section continuous casting billet is adopted, under the condition of low compression ratio, the rough rolling large reduction technology is sufficiently exerted, rolling passes and the pass reduction rate are reasonably assigned, and an S355G10+M product having excellent low-temperature toughness is produced by using the TMCP technology; the rolled steel plate does not need subsequent heat treatment such as normalizing, and thus the process costs are low.

## Description

### Technical Field

The present invention relates to a production process of a steel plate in the field of steel metallurgy, particularly to an S355G10+M wide and heavy steel plate having low-temperature toughness for ocean engineering and the production method thereof.

### Background Art

Steel for ocean engineering is applied to various complicated operating conditions and severe natural environments, of which the service life is 50% longer than that of the steel for ordinary ships. Therefore, the steel for ocean engineering is required to have high strength and high plasticity, good welding performance and seawater erosion resistance, as well as good toughness, so as to ensure that the steel and equipment can adapt to various loads and low-temperature environments.

S355G10 series steel belongs to the structural steel of European Union EN10225 standard which specifies the chemical composition, mechanical properties and welding performance of marine structural steel. At present, no standard of steel for ocean engineering has been formulated in China. S355NL and S355J2 steel plates are developed by low-carbon equivalent, micro-alloying and reasonable heat treatment (including normalization) after controlled rolling, which can meet the applications of some offshore platforms and structural components.

Patent CN 102345055A discloses a weldable fine grain structural steel S355NL/S355NLZ35 steel plate and the production method thereof. According to the method, steel plates 20-80 mm in thickness can be produced, each performance indicator after normalization can meet the standard requirements, but the method is not applicable to the production of steel plates more than 80 mm in thickness.

Patent CN 104726769A discloses a S355G10+N steel plate for large-thickness offshore platforms and the production method thereof, whose composition design contains V 0.04-0.06%. Ingot mold casting is adopted for steelmaking, steel billets are subsequently rolled, and rolled steel plates need to undergo the normalization heat treatment. The production process is complicated and the production cost is high.

### Summary

The S355G10 steel plate having low-temperature toughness for ocean engineering in the prior art is produced through micro-alloying by adding Nb, V or Ni and the normalization heat treatment process. Some heavy plates are rolled with steel ingots as the raw material. The production process is complicated and the production cost is high.

The present invention develops an S355G10+M wide and heavy steel plate having low-temperature toughness for ocean engineering through proprietary composition design and adopting the controlled rolling and controlled cooling technologies using a continuous casting billet and a low compression ratio without adopting the normalization heat treatment process. This ensures that S355G10+M wide and heavy steel plates 80 mm and 100 mm in thickness meet the performance requirements of EN10225 standard, the impact toughness in the full thickness direction (near surface + at 1/2 of the thickness) at -40°C is ≥ 200 Akv/J, and the impact toughness after 5% strain + aging at 250°C is ≥ 150 Akv/J. Besides, by adopting low-carbon composition design, the welding performance is more excellent because of CEV ≤0.39% and Pcm ≤0.20%.

The present invention specifically adopts the following technical solution:
An S355G10+M wide and heavy steel plate having low-temperature toughness for ocean engineering, characterized in that it comprises the chemical components in percentage by mass: C 0.04-0.08%, Mn 1.30-1.60%, Si 0.10-0.30%, P ≤0.015%, S ≤0.003%, Nb 0.010-0.030%, V ≤0.01%, Ti 0.010-0.020%, Alt 0.020-0.055%, Cr ≤0.20%, Ni 0.10-0.50%, Mo ≤0.05%, Cu ≤0.30%, N ≤0.006%, B ≤0.0005%, As ≤0.03%, Sb≤0.010%, Sn ≤0.020%, Pb ≤0.010%, Bi ≤0.010%, CEV ≤0.39%, and Pcm ≤0.20%, with the balance being Fe and impurities.

Preferably, the impact toughness in the full thickness direction of the steel plate at -40°C is ≥ 200 Akv/J, the impact toughness after 5% strain + aging at 250°C is ≥ 150 Akv/J, Z35 property in the thickness direction of the steel plate is ≥ 50%, and the tensile strength in the thickness direction is ≥ 490 MPa.

Preferably, the steel plate has a compact and uniform surface oxide scale structure less than 15 µm in thickness and with FeO+Fe3O4 as the main components.

The production method of the S355G10+M wide and heavy steel plate having low-temperature toughness for ocean engineering, characterized in that the production is conducted by adopting the composition design of low-carbon, Nb, Ti, Ni, and Cr addition, using a 320 mm large-section continuous casting billet, and adopting the rough rolling large reduction technology and the TMCP process technology at a low compression ratio, and the production processes include:
(1). Steelmaking process: desulfuration by hot metal pretreatment, deep dephosphorization in a converter, deep desulfuration in a ladle furnace, and control of ultra-low residual As, Sb, Sn, Pb, Bi, and B elements; adopt the dynamic soft reduction and electromagnetic stirring technologies to obtain an S355G series steel casting billet for ocean engineering with central segregation of C0.5 and C1.0;
(2). Heating process: a casting billet is heated in a heating furnace, with the heating coefficient ≥ 10.0 min/cm and the heating temperature of 1180-1220°C, ensuring the uniform heating of the casting billet, and particularly the temperature uniformity at 1/2 of the thickness;
(3). Rolling process: a 320mm large-section continuous casting billet is rolled by a 2-stage controlled rolling process at a low compression ratio, wherein in the first stage, the rolling temperature is 980∼1150°C, rolling passes and the pass reduction rate are reasonably assigned, and the rough rolling large reduction technology is adopted, with the reduction ratio ≥35mm and the reduction rate ≥20% of the last two rough rolling passes; and in the second stage, the initial rolling temperature is ≤ 840°C, to obtain an S355G steel 80 and 100 mm in thickness;
(4). Cooling process: the rolled steel plate is cooled rapidly in an ultra-fast cooling system with the self-tempering temperature of 560'C∼620'C; then stacking and slow-cooling are conducted with the stacking time of 72 hours and more.

Beneficial effects of adopting the technical solution above are as follows:
According to the present invention, the composition design of low-carbon, Nb, Ti, Ni and Cr addition is adopted, no V alloy (V elements contained are from hot metal, but not added) is added, and the costs of raw materials are low; a 320 mm large-section continuous casting billet is adopted, under the condition of low compression ratio, the rough rolling large reduction technology is sufficiently exerted, rolling passes and the pass reduction rate are reasonably assigned, and an S355G10+M product having excellent low-temperature toughness is produced by using the TMCP technology; the rolled steel plate does not need subsequent heat treatment such as normalizing, and thus the process costs are low; upon inspection after post-welding heat treatment of the steel plate and samples (580±20°C, holding temperature for 4 hours, simulate the post-welding heat treatment), the impact toughness in the full thickness direction of the steel plate (near surface + at 1/2 of the thickness) at -40°C is ≥ 200 Akv/J, the impact toughness after 5% strain + aging at 250°C is ≥ 150 Akv/J, Z35 property in the thickness direction of the steel plate is ≥ 50%, and the tensile strength in the thickness direction is ≥ 490 MPa. With the comprehensive mechanical property indicators reaching the same level as that in foreign countries, the present invention is applicable to large-thickness steel plates for ocean engineering, such as steel for development in deep and distant oceans or offshore wind towers.

Based on the study of the surface oxide scale evolution in the whole process, by optimizing the heating, rolling and cooling technologies, a compact and uniform surface oxide scale structure less than 15 µm in thickness and with FeO+Fe3O4 as the main components. The corrosion resistance of the steel according to the present invention is improved by more than 15% compared with that of the traditional marine steel (such as S355NL).

With the development of marine resources towards deep seas, the demand for steel for ocean engineering is increasing. At present, the annual demand for offshore wind tower steel reaches over 300 tons. The S355G10 steel plate in EN 10225 standard specially designed for marine structures enjoys a very large market demand and has good economic benefits, with the gross profit per ton of steel estimated to be over RMB 1000 Yuan/ton.

### Brief Description of the Drawings

FIG. 1 shows the microstructure at 1/2 of the thickness of an 80 mm thick S355G10+M steel plate.
FIG. 2 shows the microstructure at 1/2 of the thickness of a 100 mm thick S355G10+M steel plate.

### Detailed Description

The S355G10+M wide and heavy steel plate having low-temperature toughness for ocean engineering according to the present invention adopts the following composition proportion and production method:
C 0.04-0.08%, Mn 1.30-1.60%, Si 0.10-0.30%, P ≤0.015%, S ≤0.003%, Nb 0.010-0.030%, V ≤0.01%, Ti 0.010-0.020%, Alt 0.020-0.055%, Cr ≤0.20%, Ni 0.10-0.50%, Mo ≤0.05%, Cu ≤0.30%, N ≤0.006%, B ≤0.0005%, As ≤0.03%, Sb≤0.010%, Sn ≤0.020%, Pb ≤0.010%, Bi ≤0.010%, CEV ≤0.39% and Pcm ≤0.20%, with the balance being Fe and impurities. The thickness of the produced steel plate is 80 mm and 100 mm.

The maximum thickness of the steel plate produced according to the present invention is 100 mm, with the steel plate designation of S355G10+M, whose quality simultaneously satisfies the S355G7+M, S355G8+M and S355G9+M series of designations.

### Embodiment 1:

The S355G10+M steel plate has a thickness of 80 mm, and is produced by adopting the following composition ratio and production method. The component content (wt) is as follows:
C 0.048%, Mn 1.47%, P 0.011%, S 0.001%, Si 0.23%, Alt 0.03%, Nb 0.022%, V 0.003%, Ti 0.014%, Ni 0.44%, Cr 0.13%, Cu 0.01%, Mo 0.004%, N 0.0033%, CEV 0.362%, Pcm 0.16%, Pb 0.001%, Sb 0.001%, Sn 0.001%, As 0.004% and B 0.0004%, with the balance being Fe and impurities.

The production method of the steel plate is as follows:
(1) Steelmaking process: the S content after hot metal pretreatment ≤ 0.005%, the P content after deep dephosphorization in a converter ≤ 0.010%, the S content after deep desulfuration in a ladle furnace ≤ 0.002% , and control of ultra-low residual As, Sb, Sn, Pb, Bi, and B elements. Hot metal with a conforming composition is used as the raw material of the smelting, and alloy is added to avoid the increase in residual elements in the smelting process of molten steel. After RH, the temperature of molten steel is 1548°C. The superheat of molten steel is controlled at 11-17°C before a continuous casting tundish. The continuous casting is carried out with the dynamic soft reduction and electromagnetic stirring technologies, to obtain a 320mm thick casting billet with central segregation of C0.5.
(2). Heating process: the heating process is as follows: the heating coefficient of the steel billet is 10.5 min/cm, the heating temperature is 1199 °C, and the soaking time is 62 min.
(3). Rolling process: a 2-stage controlled rolling process is adopted, wherein in the first stage, the temperature at the end of the rolling is 1008 °C, the reduction amount of the last two passes is 38 mm and 38 mm, and the reduction rate of the passes is 24% and 21%; and in the second stage, the initial rolling temperature is 828 °C, and the finishing rolling temperature is 805 °C.
(4). Cooling process: the rolled steel plate is cooled on-line in a ultra-fast cooling equipment, with the self-tempering temperature of 608 °C; then stacking and slow-cooling are conducted timely after rolling with the stacking temperature of 580 °C and the stacking time of 78 hours. Flaw detection is conducted when the temperature of unstacked steel is 37 °C.

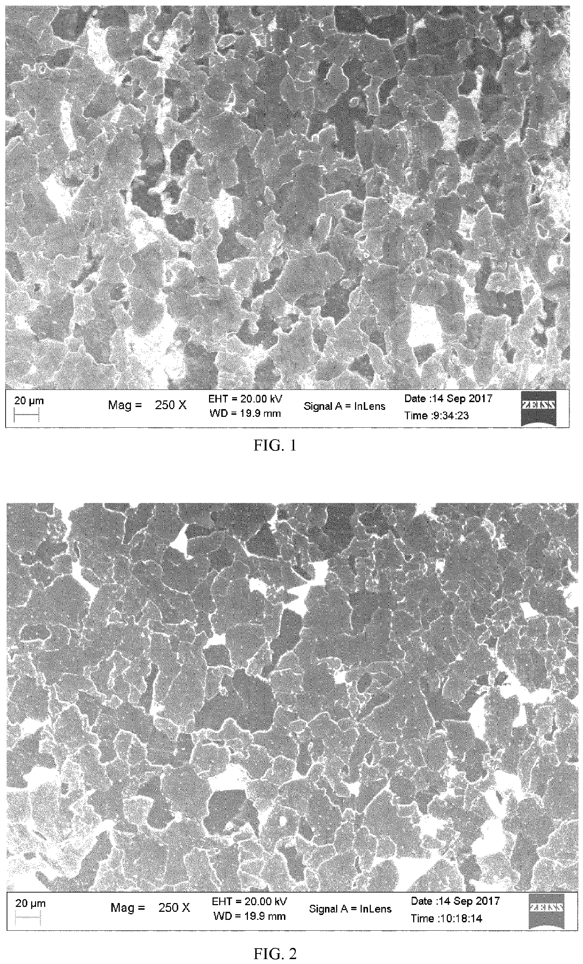

The S355G10+M steel billet is rolled into an 80 mm steel plate, whose microstructure at 1/2 of the thickness is shown in FIG. 1. The microstructure of the steel plate is uniform and fine, with the grain size of 9.0 grade. The microstructure type is: ferrite + pearlite, and a small amount of bainite, with the banded structure grade of 0.5. The mechanical properties are as follows: yield strength 431 MPa, tensile strength 527 MPa, and yield ratio 82%. The impact energy Akv (upper surface, 1/4 T, 1/2 T, 3/4 T and lower surface, where T denotes thickness) at -40°C of each position in the thickness direction is: 254J, 222J, 205J, 299J, and 245 J, the impact energy at -40°C after 5% strain + aging at 250°C is: 263 J, and the Z direction is: 77%, 76% and 73%.

### Embodiment 2:

The S355G10+M steel plate has a thickness of 100 mm, and is produced by adopting the following composition ratio and production method. The composition content (wt) is as follows:
C 0.06%, Mn 1.50%, P 0.013%, S 0.001%, Si 0.24%, Alt 0.035%, Nb 0.023%, V 0.003%, Ti 0.016%, Ni 0.47%, Cr 0.13%, Cu 0.01%, Mo 0.004%, N 0.0033%, CEV 0.36%, Pcm 0.15%, Pb 0.001%, Sb 0.001%, Sn 0.002%, As 0.004% and B 0.0004%, with the balance being Fe and impurities.

The production method of the steel plate is as follows:
(1) Steelmaking process: the S content after hot metal pretreatment ≤ 0.005%, the P content after deep dephosphorization in a converter ≤ 0.010%, the S content after deep desulfuration in a ladle furnace ≤ 0.002% , and control of ultra-low residual As, Sb, Sn, Pb, Bi, and B elements. Hot metal with a conforming composition is used as the raw material of the smelting, and alloy is added to avoid the increase in residual elements in the smelting process of molten steel. After RH, the temperature of molten steel is 1543 °C. The superheat of molten steel is controlled at 9-15 °C before a continuous casting tundish. The continuous casting is carried out with the dynamic soft reduction and electromagnetic stirring technologies, to obtain 320mm thick casting billet with central segregation of C0.5.
(2). Heating process: the heating process is as follows: the heating coefficient of the steel billet is 11 min/cm, the maximum heating temperature is 1207 °C, and the soaking time is 58 min.
(3). Rolling process: a 320 mm large-section continuous casting billet is rolled by a 2-stage controlled rolling process at a low compression ratio, wherein in the first stage, the temperature at the end of the rolling is 998 °C, the reduction amount of the last two passes is 41 mm and 41 mm, and the reduction rate of the passes is 22% and 20%; and in the second stage, the initial rolling temperature is 819 °C, and the finishing rolling temperature is 807 °C.
(4). Water-cooling process: the rolled steel plate is cooled on-line in the ultra-fast cooling equipment, with the self-tempering temperature of 591 °C; then stacking and slow-cooling are conducted timely after rolling with the stacking temperature of 580 °C and stacking time of 74 hours. Flaw detection is conducted when the temperature of unstacked steel is 48 °C.

The S355G10+M steel billet is rolled into a 100 mm steel plate, whose microstructure at 1/2 of the thickness is shown in FIG. 2. The microstructure of the steel plate is uniform and fine, with the grain size of 9.5 grade. The microstructure type is: ferrite + pearlite, and a small amount of bainite, with the banded structure grade of 1.0. The mechanical properties are as follows: yield strength 402 MPa, tensile strength 516 MPa, and yield ratio 78%. The impact energy Akv (upper surface, 1/4 T, 1/2 T, 3/4 T and lower surface, where T denotes thickness) at -40°C of each position in the thickness direction is: 271J, 204J, 206J, 283J, and 204 J, the impact energy at -40°C after 5% strain + aging at 250°C is: 171 J, and the Z direction is: 75%, 75% and 75%.

## Claims

1. An S355G10+M wide and heavy steel plate having low-temperature toughness for ocean engineering, **characterized in that** it comprises the chemical components in percentage by mass: C 0.04-0.08%, Mn 1.30-1.60%, Si 0.10-0.30%, P ≤0.015%, S ≤0.003%, Nb 0.010-0.030%, V ≤0.01%, Ti 0.010-0.020%, Alt 0.020-0.055%, Cr ≤0.20%, Ni 0.10-0.50%, Mo ≤0.05%, Cu ≤0.30%, N ≤0.006%, B ≤0.0005%, As ≤0.03%, Sb≤0.010%, Sn ≤0.020%, Pb ≤0.010%, Bi ≤0.010%, CEV ≤0.39%, and Pcm ≤0.20%, with the balance being Fe and impurities.

2. The S355G10+M wide and heavy steel plate having low-temperature toughness for ocean engineering according to Claim 1, **characterized in that** the impact toughness in the full thickness direction of the steel plate at -40°C is ≥ 200 Akv/J, the impact toughness after 5% strain + aging at 250°C is ≥ 150 Akv/J, Z35 property in the thickness direction of the steel plate is ≥ 50%, and the tensile strength in the thickness direction is ≥ 490 MPa.

3. The S355G10+M wide and heavy steel plate having low-temperature toughness for ocean engineering according to Claim 1, **characterized in that** the steel plate has a compact and uniform surface oxide scale structure less than 15 µm in thickness and with FeO+Fe3O4 as the main components.

4. The production method of the S355G10+M wide and heavy steel plate having low-temperature toughness for ocean engineering according to any one of Claims 1-3, **characterized in that** the production is conducted by adopting the composition design of low-carbon, Nb, Ti, Ni, and Cr addition, using a 320 mm large-section continuous casting billet, and adopting the rough rolling large reduction technology and the TMCP process technology at a low compression ratio, and the production processes include:
(1). Steelmaking process: desulfuration by hot metal pretreatment, deep dephosphorization in a converter, deep desulfuration in a ladle furnace, and control of ultra-low residual As, Sb, Sn, Pb, Bi, and B elements; adopt the dynamic soft reduction and electromagnetic stirring technologies to obtain an S355G series steel casting billet for ocean engineering with central segregation of C0.5 and C1.0;
(2). Heating process: a casting billet is heated in a heating furnace, with the heating coefficient ≥ 10.0 min/cm and the heating temperature of 1180-1220°C, ensuring the uniform heating of the casting billet, and particularly the temperature uniformity at 1/2 of the thickness;
(3). Rolling process: a 320mm large-section continuous casting billet is rolled by a 2-stage controlled rolling process at a low compression ratio, wherein in the first stage, the rolling temperature is 980∼1150°C, rolling passes and the pass reduction rate are reasonably assigned, and the rough rolling large reduction technology is adopted, with the reduction ratio ≥35mm and the reduction rate ≥20% of the last two rough rolling passes; and in the second stage, the initial rolling temperature is ≤ 840°C, to obtain an S355G steel 80 and 100 mm in thickness;
(4). Cooling process: the rolled steel plate is cooled rapidly in an ultra-fast cooling system with the self-tempering temperature of 560°C∼620°C; then stacking and slow-cooling are conducted with the stacking time of 72 hours and more.
